(19) Europäisches Patentamt
European Patent Office
Office européen des brevets

(11) Veröffentlichungsnummer: **0 473 032 A1**

(12) # EUROPÄISCHE PATENTANMELDUNG

(21) Anmeldenummer: **91113810.5**

(22) Anmeldetag: **17.08.91**

(51) Int. Cl.5: **C08L 77/00**, //(C08L77/00, 61:06)

(30) Priorität: **30.08.90 DE 4027402**

(43) Veröffentlichungstag der Anmeldung:
**04.03.92 Patentblatt 92/10**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **El-Sayed, Aziz, Dr.**
**Saarlautener Strasse 39**
**W-5090 Leverkusen 1(DE)**
Erfinder: **Döring, Joachim, Dr., c/o Bayer Japan Ltd.**
**108 Takanawa 4-Chome, Minatoku**
**Toyko 108(JP)**
Erfinder: **Dhein, Rolf, Dr.**
**Deswatinesstrasse 30**
**W-4150 Krefeld(DE)**

(54) **Verwendung spezieller Novolake in Polyamiden.**

(57) Die Erfindung betrifft die Verwendung spezieller Phenol-Formaldehyd-Novolake, deren Glastemperaturen eine Mindesthöhe aufweisen muß, zur Herstellung von Polyamidformmassen mit erhöhter Steifigkeit und Festigkeit nach Konditionierung und erhöhter Alterungsbeständigkeit.

EP 0 473 032 A1

Die Erfindung betrifft die Verwendung spezieller Phenol-Formaldehyd-Novolake, deren Glastemperaturen eine Mindesthöhe aufweisen muß, zur Herstellung von Polyamidformmassen mit erhöhter Steifigkeit und Festigkeit nach Konditionierung und erhöhter Alterungsbeständigkeit.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen polyamidbildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern), zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Ein Nachteil der Polyamide als Werkstoffklasse liegt in ihrer hohen Wasseraufnahme, bedingt durch die Polarität und Hydrophilie der Amidgruppen. Das als Weichmacher wirkende Wasser erhöht zwar die Duktilität des Materials, jedoch sinken Steifigkeit und Festigkeit stark ab. Die hohe Wasseraufnahme ist daher ein limitierender Faktor für die weitere Verbreitung von Polyamiden.

Methoden, die Wasseraufnahme von Polyamiden signifikant zu verringern, wobei auch andere Eigenschaften wie Fließfähigkeit, Oberflächengüte und UV-Stabilität verbessert sein können, sind beispielsweise in den eigenen Patentanmeldungen DOS 3 248 329, EP O 240 887, DOS 3 612 150, DOS 3 610 595, US 3 207 620 und US 4 745 146 beschrieben. Dabei werden Mono-oder Bisphenole als Additive den Polyamiden zugesetzt. Die resultierenden Formmassen weisen sehr gute Eigenschaften auf und sind vorteilhafterweise z.B. für Anwendungen, die eine erhöhte Dimensionsstabilität erfordern, einsetzbar.

Es wäre allerdings wünschenswert, die Eigenschaft dieser Formmassen noch weiter zu verbessern.

Phenolhaltige Polyamide sind auch noch beispielsweise in UDSSR 687 088 sowie bei V.N. Stepanov, A.A. Speranskii, L.S. Gerasimova, G.V. Khutareva, Khim. Volokna 1978 (6), 51; V.N. Stepanov, A.V. Dolgov, A.A. Speranskii, Khim. Volokna 1977 (4), 31; V.N. Stepanov, V.F. Lednik, A.I. Lubnina, A.A. Speranskii, Khim. Volokna 1975 (4), 32; S.I. Shkusenko, V.M. Kharitonov, B.A. Khar'Kov, et al., Khim. Volokna 1983 (5), 25 beschrieben. Viele der in den genannten Patentanmeldungen bzw. Artikeln beschriebenen Verbindungen fanden später noch einmal in JA 60/051 744, 60/051 745, Ja 51-30 958 und WO 88/06169, sowie US 4 849 474, Erwähnung.

In keiner der genannten Publikationen wird jedoch erwähnt, daß der Steifigkeitsabfall bei Verwendung spezieller Polyphenole bei der Konditionierung von Polyamid-Spritzgußmassen verringert bzw. verhindert werden kann. Dazu kommt, daß eigene Versuche ergaben, daß die im Stand der Technik vorgeschlagenen Maßnahmen zur Reduktion der Wasseraufnahme häufig mit einer Verringerung der Thermooxidationsbeständigkeit einhergeht.

Es wäre daher wünschenswert, durch Verwendung eines Stoffes den Steifigkeits- / Festigkeitsabfall bei der Konditionierung von Polyamiden signifikant zu verringern, ohne die Thermooxidationsbeständigkeit zu vermindern.

Überraschend wurde nun gefunden, daß durch Verwendung thermoplastischer Phenol-Formaldehydharze bestimmter enger Strukturmerkmale und bestimmter Bedingungen bezüglich ihrer Glastemperatur als Additive für Polyamide es gelingt, Polyamidformmassen mit wesentlich verringertem Steifigkeitsverlust bei Konditionierung bei gleichzeitig erhöhter Thermooxidationsbeständigkeit herzustellen.

Die überraschende und unerwartete Erkenntnis, welche der vorliegenden Erfindung zugrunde liegt, war, daß der Steifigkeits- / Festigkeitsabfall bei Konditionierung dann weitgehend vermieden werden kann, wenn man als phenolische Verbindung Novolake einzeln zusetzt, deren Glastemperaturen (beispielsweise bestimmt durch DSC) in etwa mit der der Polyamide im trockenen Zustand übereinstimmten oder höher als diese sind. Die Glastemperaturen aliphatischer Polyamide wie PA 6 und PA 66 liegen typischerweise im Bereich von 45 bis 60 °C (s. beispielsweise Brandrup, Immergut; Polymer Handbook).

Weiterhin war die überraschende und unerwartete Erkenntnis, daß durch diese Maßnahme gleichzeitig die Thermooxidationsbeständigkeit der Polyamide verbessert wird, d.h., die Nachteile des Standes der Technik werden überwunden.

Gegenstand der Erfindung ist daher die Verwendung thermoplastischer Phenol-Formaldehydharze (Novolake) der Struktur (I)

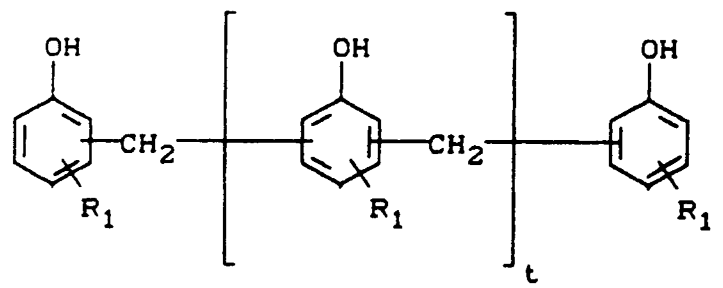

(I),

wobei

R₁ Wasserstoff oder $C_{1-5}$-Alkyl oder Phenyl, insbesondere Wasserstoff oder $CH_3$, ganz besonders bevorzugt Wasserstoff,
($R_1 \neq H$ ist vorzugsweise in der para- und/oder ortho-Stellung zur Phenolgruppe)

t eine ganze Zahl von (im Schnitt) mindestens 2 bis ca. 15

bedeuten, wobei die Glastemperatur der Novolake (I) nicht kleiner als ca. 50°C sein soll, zur Herstellung von Polyamidformmassen mit erhöhter Steifigkeit und/oder Festigkeit nach Konditionierung und erhöhter Beständigkeit gegen Thermooxidation, wobei der Biege-E-Modul bei Einsatz von 10 Gew.-% Novolak (I) bei einer Konditionierung nach ISO 1110 einen um mindestens 10 % erhöhten Wert gegenüber einem novolakfreien Polyamid aufweisen soll.

Als Polyamide sind beispielsweise und bevorzugt geeignet:
PA6, 66, 610, 69, 11, 12, 1212 und 6/66-Copolyamide. Besonders bevorzugt sind PA 6, 66, ihre Mischungen sowie deren Copolyamide auf Basis PA 6 bzw. 66. Diese Polyamide sind bekannt.

Die zur Herstellung der Novolake (I) verwendbaren Phenole sind beispielsweise und bevorzugt: Phenol, o-, m- und p-Kresol sowie p-Phenylphenol. Als Aldehyd wird Formaldehyd eingesetzt. Besonders bevorzugt sind Phenol und Formaldehyd als Ausgangskomponenten.

Erfindungsgemäß werden Novolake, d.h., thermoplastische, nicht selbsthärtende Phenol-Formaldehydharze, eingesetzt. Ihre Glastemperatur (bestimmt durch DSC) muß erfindungsgemäß mindestens ca. 50°C betragen. Die Glastemperatur von PA 6 liegt z.B. typischerweise je nach Feuchtegehalt, im Bereich von 45 bis 60°C. Bevorzugt beträgt die Glastemperatur der Novolake (I) mindestens 55°C, insbesondere mindestens 60°C. Die Herstellung entsprechender Novolake aus Phenolen und Formaldehyd ist bekannt (s. z.B. Encyclopedia of Polymer Science & Engineering, Vol. 11, Wiley-Interscience, John Wiley & Sons, New York 1988).

Die Glastemperatur der Novolake wird bevorzugt durch DSC (Differential Scanning Calorimetry) bestimmt.

Phenol/Formaldehyd-Harze vom Resoltyp sind nicht einsetzbar.

Die erfindungsgemäße Verwendung kann auch in Kombination mit Zusatzstoffen geschehen, beispielsweise anorganischen Füll- bzw. Verstärkungsstoffen [bevorzugt sind faserige (Glas-, Kohlenstoffasern) Verstärkungsstoffe und mineralische Füllstoffe (beispielsweise Talkum, Glimmer, Kaolin, Wollastonit, Quartz, Dolomit, u.a.m.)], UV-Stabilisatoren, Antioxidantien, Pigmente, Farbstoffe, Nukleierungsmittel, Kristallisationsbeschleuniger- bzw.

Verzögerer, Fließhilfsmittel, Gleitmittel, Entformungsmittel, Flammschutzmittel (mit Ausnahme von Phosphorylnitrid bzw. seinen Vorstufen und Alkali- bzw. Ammoniumphosphaten) sowie (vernetzte), insbesondere gepfropfte (core/shell)- Kautschuke bzw. kautschukartige Polymere (Schlagzähmodifikatoren), bevorzugt auf Polydien-, Polyacrylat- und Polyolefinbasis [letztere beispielsweise auf Basis EP(D)M und Ethylen-Acrylester-Acrylsäure (Maleinsäureanhydrid)-Terpolymeren)].

Die Kautschuke können auch als Kern/Mantel-Kautschuke vorliegen.

Die kautschukartigen Polymeren (Schlagzähmodifikate) sollten, wenn nötig, gegebenenfalls zumindest teilweise, chemisch so modifiziert sein, daß eine partielle Ankopplung der beiden Phasen erfolgen kann. Möglichkeiten hierzu sind im Stand der Technik beschrieben und grundsätzlich bekannt (z.B. Carbonsäure- oder Carbonsäureanhydridgruppen oder Carbonsäure-(t.-alkyl)ester oder Aminogruppen oder auch Epoxidgruppen in die Kautschuke, vorzugsweise in den Mantel (shell) aus gepfropften Monomeren, eingebaut).

Die Erhöhung der Steifigkeit nach Konditionierung gegenüber dem Stand der Technik ist abhängig von der Menge an Novolak (I); typischerweise soll bei erfindungsgemäßer Verwendung die Menge an Novolaken (I) im Bereich von 1 bis 30 Gew.-%, bevorzugt zwischen 5 und 25 Gew.-% und insbesondere bevorzugt im Bereich von 7 bis 15 Gew.-% liegen. Eine besonders bevorzugte Einsatzmenge bei der erfindungsgemäßen Verwendung ist der Bereich von 8 bis 12 Gew.-%. Je nach Menge und Typ der Novolake (I) und der

Polyamide kann bei der erfindungsgemäßen Verwendung beispielsweise der Biege-E-Modul nach Konditionierung nach ISO 1110 überraschend stark, z.B. um 100 bis 400 %, erhöht sein.

Bevorzugt werden die Novolake (I) in Kombination mit

A) mindestens 35 Gew.-% (bezogen auf A) - C)) Polyamiden),

B) bis zu 60 Gew.-% (bezogen auf A) - C)) Glasfasern, Kohlenstoffasern, Glaskugeln und mineralischen Füllstoffen und anderen Füll-/Verstärkungsstoffen,

sowie

C) Gleit- bzw. Entformungsmitteln, Farbstoffen, Pigmenten, Nukleierungsmitteln, Stabilisatoren, Antioxidantien sowie schlagzähmodifizierenden Kautschuken (Dien-, Olefin-, Acrylat-Kautschuke) in Mengen von bis zu 20 Gew.-% (bezogen auf A) - C)),

wobei sich die Prozentangaben von A) - C) zu 100 % ergänzen müssen, verwendet.

Besonders bevorzugt werden die Novolake (I) in Kombination mit

A') mindestens 40 Gew.-% (bezogen auf A') - D')) Polyamiden A),

B') bis zu 50 Gew.-%, insbesondere 5 bis 50 Gew.-%, (bezogen auf A') - D')) an Verstärkungs-/Füllstoffen B),

C') 1 - 15 Gew.-%, insbesondere 3 - 12 Gew.-%, (bezogen auf A') - D') an (bevorzugt mit reaktiven Gruppen funktionalisierten) Dien-, Acrylat- oder Olefin-Kautschuken oder core/shell-gepfropften Propfkautschuken

sowie

D') Gleit- bzw. Entformungsmitteln, Pigmenten, Farbstoffen, Stabilisatoren, Antioxidantien, Nukleierungsmitteln usw. in üblichen Mengen,

wobei die Prozentangaben A') - D') sich zu 100 % ergänzen sollen, verwendet.

Phenolharze sind prinzipiell schon als Additive für Polyamide beschrieben worden (s. beispielsweise DOS 2 800 467, 2 810 549, DAS 1 148 739, US 4 845 162, WO 88/06169, JA 60/051 744, UDSSR 687 088 sowie V.N. Stepanov, A.V. Dolgov, A.A. Speranskii, Khim. Volokna 1977 (4), 31), wobei häufig (WO 88/06169, US 4 845 162, DOS 2 810 549, DOS 2 800 467) zwischen härtbaren (thermisch selbstvernetzenden) Harzen bzw. thermoplastischen Harzen (Novolaken) nicht unterschieden wird, d.h., beide als geeignet angeführt werden.

In WO 88/06169 wird angeführt, daß bestimmte Polyphenole die Wasseraufnahme von Polyamiden reduzieren. Als spezifische Beispiele für Polyphenole werden auch Phenolharze genannt, wobei sowohl selbsthärtende (Resole) als auch thermoplastische (Novolake) als geeignet bezeichnet werden.

Eigene Versuche ergaben, daß der Einsatz von Resolen unbeherrschbar schnell zu Vergelung/Vernetzung führt und technisch nicht brauchbar ist. WO 88/06169 gibt keinerlei Hinweis (auch keinerlei Beispiele) darauf, daß durch Verwendung bestimmter Novolake mit besonderen Strukturmerkmalen und Anforderungen an die Glastemperatur nach Konditionierung hochsteife (und auch in ihrer Thermooxidationsbeständigkeit verbesserte Polyamide resultieren. Novolake tauchen in keinem Beispiel der genannten Anmeldung auf; üblicherweise wird Bisphenol A (2,2-Bis(4-hydroxyphenyl)propan) verwendet, welches, wie Vergleichsbeispiele im Beispielteil zeigen, eher etwas weichmachend wirkt. Desgleichen findet sich in WO 88/06169 auch nicht der geringste Hinweis auf einen Zusammenhang zwischen Glastemperatur der phenolischen Additive und Steifigkeitsniveau nach Konditionierung (bzw. auf eine Steifigkeitsverbesserung durch solche Zusätze).

Die erfindungsgemäße Verwendung ist daher überraschend und nicht aus dem Stand der Technik ableitbar.

Bei besonders bevorzugter Verwendung enthalten die resultierenden Polyamidformmassen neben den Polyamiden, den Novolaken (und gegebenenfalls Füll- / Verstärkungsstoffen) noch Schlagzähmodifikatoren, bevorzugt auf Basis von Dien-, Acrylat- und Olefinkautschuken, beispielsweise Polybutadienkautschuke, Poly-n-butyl-acrylatkautschuke (beide gegebenenfalls als Kern-Schale-Elastomer mit thermoplastischer Schale mit Monomeren wie Acrylestern, Styrol, Acrylnitril wie Acrylsäure, Maleinanhydrid, Maleinhalbestern oder tertiär-Alkylestern von (Meth)acrylsäure als Haftgruppen zum Polyamid) ), EPDM-, EPM-Kautschuk (gegebenenfalls Maleinsäureanhydrid-funktionalisiert), Ethylen-Acrylester-(Meth)acrylsäure-bzw. -Maleinsäureanhydrid-bzw. -Glycidylmethacrylat-Terpolymere und andere mehr. Diese Formmassen weisen bei kaum verringerter Steifigkeit/Festigkeit, insbesondere nach Konditionierung, hoher Fließfähigkeit und Beständigkeit gegen Thermooxidation noch deutlich verbesserte Zähigkeitswerte auf, wobei völlig überraschend der Abfall der Zähigkeitswerte bei Thermooxidation hier besonders stark verringert sein kann. Insgesamt weisen insbesondere die bei besonders bevorzugter Verwendung resultierenden Formmassen ein besonders ausgewogenes Eigenschaftsprofil von gleichzeitig hoher Fließfähigkeit, Zähigkeit, Steifigkeit/Festigkeit nach Konditionierung, Beständigkeit gegen Thermooxidation sowie gegebenenfalls auch erhöhter UV-Beständigkeit (bessere Oberflächenqualität nach Bewitterung) auf. Auch die Wasseraufnahme kann bei erfindungsgemäßer Verwendung verringert sein. Häufig kann dann als weiterer, unerwarteter Vorteil aufgrund des sehr ausgewogenen Eigenschaftsprofils sogar auf eine Konditionierung verzichtet werden.

Bei gegebener chemischer Struktur und Menge der Novolake (I) hängt das Maß der Steifigkeitserhöhung nach Konditionierung im wesentlichen von der Glastemperatur der Novolake (I) ab.

Die bei erfindungsgemäßer Verwendung erhaltenen Formmassen sind eine wertvolle Bereicherung des Standes der Technik. Insbesondere die bei gleichzeitiger Verwendung von Novolaken nach Formel (I) und Schlagzähmodifikatoren sich ergebenden ausgewogenen Eigenschaften der resultierenden Formmassen sind nicht aus dem Stand der Technik ableitbar. Die vorliegende Erfindung ist daher überraschend und unerwartet.

Die Formmassen der Erfindung werden durch Mischen der Komponenten, gegebenenfalls als Konzentrate, gegebenenfalls in mehreren Schritten, in der Schmelze, bevorzugt in Extrudern oder Knetern, hergestellt.

Die bei erfindungsgemäßer Verwendung entstehenden Formmassen mit ihrer einzigartigen Kombination von hoher Steifigkeit/Festigkeit nach Konditionierung und Beständigkeit gegen Thermooxidation lassen sich vorteilhaft zur Herstellung von Formteilen, z.B. durch Spritzguß oder Extrusion, einsetzen, insbesondere zur Herstellung solcher Teile, an die hohe Anforderungen bezüglich mechanischer Steifigkeit/Festigkeit und thermischer Belastbarkeit gestellt werden, z.B. Radkappen, Sitzschalen, Kühlerwasserkästen, Ansaugkrümmer, Pedale, Gehäuse von Elektrowerkzeugen und andere mehr. Diese Verwendung ist ebenfalls Gegenstand der Erfindung. Bevorzugte Verwendung ist die Herstellung solcher Teile, die Temperaturen von 100°C und mehr, bevorzugt 110°C und mehr und insbesondere bevorzugt 120°C und mehr, ausgesetzt sein können.

Die nachfolgenden Beispiele erläutern die Erfindung, ohne sie darauf einzuschränken. Insbesondere charakterisieren die Einzelbeispiele auch daraus zu bildende Bereiche bzw. Stoffgruppen.

## Beispiele

### Beispiele 1 + 2

93 Gew.-Teile eines glasfaserverstärkten PA 66 (32 % Glasgehalt) wurden mit je 7 Gew.-Teilen eines PhenolFormaldehyd-Novolaks (Phenol: $CH_2O$ = 1 : 0,78; $T_g$ (DSC) ≈ 61°C) sowie eines p-Kresol-Novolaks ($T_g$ (DSC) ≈ 85°C) über einen ZSK 53-Doppelwellenextruder compoundiert, zu Prüfkörpern verarbeitet und die mechanischen Eigenschaften geprüft (Tabelle 1). Die Formmassen enthielten 30 % Glasfasern.

### Vergleichsbeispiele 1 - 3

In derselben Weise wurde dasselbe PA 66 mit 7 Gew.-Teilen PA 66 ($\eta_{rel}$ (m-Kresol 25°C, 1 %) ≈ 3,0), 7 Gew.-Teilen Bisphenol A (BPA) und 7 Gew.-Teilen 1,1-Bis (4-hydroxyphenyl)-3,3,5-trimethylcyclohexan (Bisphenol TMC) compoundiert. (s. Tabelle 1)

### Beispiele 3 + 4

In der für die Beispiele 1 + 2 beschriebenen Weise wurden PA 6 Compounds, enthaltend 30 Gew.-Teile Glasfasern, je 7 Gew.-Teile der beiden Novolake sowie ca. 5 Gew.-Teile eines Polybutadien-Kautschuks, hergestellt (s. Tabelle 2).

### Vergleichsbeispiele 4 - 6

In der gleichen Weise wurden PA 6 Compounds ohne phenolisches Additiv bzw. je 7 Gew.-Teile der beiden Bisphenole enthaltend hergestellt (s. Tabelle 2).

### Beispiele 5 + 6

76,3 Gew.-Teile eines mineralgefüllten PA 6 (40 % Füllstoffgehalt) wurden mit je 7 Gew.-Teilen eines Phenol-Formaldehyd-Novolaks (Phenol: $CH_2O$ = 1 : 0,78; $T_g$ (DSC) ≈ 61°C) bzw. eines p-Kresol-Novolaks ($T_g$ (DSC) ≈ 85°C) sowie mit je 16,7 Gew.-Teilen PA 6 ($\eta_{rel}$ ≈ 3,5) über einen ZSK 53-Doppelwellenextruder compoundiert, zu Prüfkörpern verarbeitet und die mechanischen Eigenschaften geprüft (Tabelle 3). Die Formmassen enthielten 30 % Füllstoff.

Vergleichsbeispiele 7 - 9

In derselben Weise wurde dasselbe PA 6 mit 23,7 Gew.-Teilen PA 6 ($\eta_{rel}$ (m-Kresol 25 °C, 1 %) ≈ 3,5), 16,7 Gew.-Teilen PA 6 und 7 Gew.-Teilen Bishenol A sowie mit 16,7 Gew.-Teilen PA 6 und 7 Gew.-Teilen 1,1-Bis(4-hydroxyphenyl)-3,3,5-trimethylcyclohexan compoundiert (s. Tabelle 3)

Beispiele 7 - 10

Die Proben der Beispiele 1 - 4 wurden einer Heißluftalterung (140 °C, 3 Wochen) unterworfen und das Fortschreiten der Schädigung durch Messung der Schlagzähigkeit (Izod $a_n$, 23 °C) verfolgt (Tabelle 4).

Vergleichsbeispiele 10 - 15

In derselben Weise wurden die Vergleichsproben 1 - 6 thermisch gealtert (Tabelle 4).

Tabelle 1

| Beispiel | | 1 | | 2 | | Vgl. 1 | | Vgl. 2 | | Vgl. 3 | |
|---|---|---|---|---|---|---|---|---|---|---|---|
| Additiv | | Phenol-Novolak | | p-Kresol-Novolak | | - | | Bisphenol A | | Bisphenol TMC | |
| Aschegehalt | % | 30,6 | | 30,4 | | 29,9 | | 30,3 | | 30,5 | |
| Krist.-Temp. | °C | 231 | | 231 | | 234 | | 227 | | 229 | |
| Krist.-Wärme | J/g | 32 | | 35 | | 37 | | 36 | | 33 | |
| Fließspirale (290°C / 80 bar) | cm | 78 | | 72 | | 59 | | 79 | | 83 | |
| Wasseraufnahme nach ISO 1110 | % | 1,3 | | 1,1 | | 1,7 | | 1,4 | | 1,3 | |
| nach Sättigung | % | 3,9 | | 4,0 | | 5,3 | | 3,9 | | 4,0 | |
| | | sprf. | kond.[1] | sprf. | kond.[1] | sprf. | kond.[1] | sprf. | kond.[1] | sprf. | kond.[1] |
| Reißfestigkeit | MPa | 181 | 131 | 177 | 136 | 161 | 104 | 172 | 103 | 177 | 121 |
| Reißdehnung | % | 3 | 5 | 3 | 4 | 5 | 9 | 4 | 9 | 3 | 6 |
| Zug-E-Modul | MPa | 10100 | 8600 | 9700 | 8700 | 8900 | 5800 | 10100 | 5700 | 9800 | 7800 |
| Biegesp. 3,5 % | MPa | 263 | 190 | 254 | 199 | 224 | 129 | 252 | 128 | 256 | 169 |
| Biegefestigkeit | MPa | 272 | 212 | 268 | 219 | 254 | 164 | 267 | 165 | 267 | 195 |
| Randfaserdehnung | % | 4 | 5 | 4 | 5 | 5 | 7 | 4 | 7 | 4 | 6 |
| Biege E-Modul | MPa | 8700 | 7300 | 8400 | 7500 | 7600 | 5100 | 8700 | 4900 | 8500 | 6600 |
| IZOD an 23°C | KJ/m² | 36 | 42 | 30 | 44 | 56 | 73 | 38 | 67 | 34 | 44 |
| -30°C | KJ/m² | 32 | 32 | 34 | 36 | 44 | 41 | 32 | 35 | 32 | 33 |
| IZOD ak 23°C | KJ/m² | 7 | 8 | 7 | 8 | 8 | 13 | 8 | 11 | 7 | 8 |
| HDT Meth. A | °C | 223 | -- | 233 | -- | 232 | -- | 223 | -- | 214 | -- |

1) ISO 1110; 70°C, 62 % r.F.; Lagerung bis zur Gewichtskonstanz

Tabelle 2

| Beispiel | | 3 | | 4 | | Vgl. 4 | | Vgl. 5 | | Vgl. 6 | |
|---|---|---|---|---|---|---|---|---|---|---|---|
| Additiv | | Phenol-Novolak | | Kresol-Novolak | | - | | Bisphenol A | | Bisphenol TMC | |
| Aschegehalt | % | 30,2 | | 30,2 | | 30,2 | | 30,2 | | 30,4 | |
| Krist.-Temp. | °C | 188 | | 189 | | 192 | | 185 | | 186 | |
| Krist.-Wärme | J/g | 33 | | 32 | | 37 | | 33 | | 33 | |
| Krist.-Zeit isotherm 200°C | min | 3,6 | | 3,5 | | 2,4 | | 6,5 | | 5,5 | |
| Fließspirale (270°C / 80 bar) | cm | 60 | | 59 | | 48 | | 63 | | 61 | |
| Wasseraufnahme nach ISO 1110 | % | 1,3 | | 1,3 | | 1,7 | | 1,3 | | 1,2 | |
| nach Sättigung | % | 4,4 | | 4,7 | | 5,4 | | 4,3 | | 4,6 | |
| | | sprf. | kond.[1] | sprf. | kond.[1] | sprf. | kond.[1] | sprf. | kond.[1] | sprf. | kond.[1] |
| Reißfestigkeit | MPa | 171 | 115 | 167 | 120 | 153 | 95 | 162 | 94 | 168 | 110 |
| Reißdehnung | % | 4 | 6 | 4 | 6 | 5 | 9 | 4 | 10 | 4 | 7 |
| Zug-E-Modul | MPa | 9900 | 7600 | 9600 | 7800 | 9200 | 5300 | 9900 | 5200 | 9700 | 7100 |
| Biegesp. 3,5 % | MPa | 240 | 164 | 236 | 173 | 207 | 109 | 224 | 110 | 235 | 150 |
| Biegefestigkeit | MPa | 257 | 184 | 255 | 192 | 231 | 137 | 242 | 138 | 253 | 173 |
| Randfaserdehnung | % | 4 | 6 | 4 | 5 | 5 | 7 | 4 | 7 | 4 | 6 |
| Biege E-Modul | MPa | 8300 | 6600 | 8200 | 6900 | 7400 | 4600 | 8000 | 4600 | 8100 | 6200 |
| IZOD an 23°C | KJ/m² | 65 | 63 | 67 | 63 | 71 | 79 | 67 | 77 | 64 | 63 |
| -30°C | KJ/m² | 49 | 49 | 54 | 50 | 65 | 61 | 51 | 52 | 54 | 51 |
| IZOD ak 23°C | KJ/m² | 13 | 15 | 13 | 15 | 16 | 23 | 14 | 20 | 13 | 15 |
| HDT Meth. A | °C | 177 | -- | 183 | -- | 193 | -- | 178 | -- | 178 | -- |

[1] Konditionierungs s. Tabelle 1

Tabelle 3

| Beispiel | | 5 | | 6 | | Vgl. 7 | | Vgl. 8 | | Vgl. 9 | |
|---|---|---|---|---|---|---|---|---|---|---|---|
| Additiv | | Phenol-Novolak | | Kresol-Novolak | | - | | Bisphenol A | | Bisphenol TMC | |
| Aschegehalt | % | 30,4 | | 29,7 | | 29,9 | | 29,9 | | 30,0 | |
| Krist.-Temp. | °C | 187 | | 187 | | 190 | | 184 | | 185 | |
| Krist.-Wärme | J/g | 41 | | 38 | | 40 | | 39 | | 37 | |
| Krist.-Zeit isotherm 200°C | min | 4,1 | | 4,6 | | 3,0 | | 10 | | 10 | |
| Fließspirale (270°C / 80 bar) | cm | 43 | | 45 | | 36 | | 48 | | 49 | |
| Wasseraufnahme nach ISO 1110 | % | 2,0 | | 1,8 | | 2,3 | | 1,8 | | 1,8 | |
| nach Sättigung | % | 5,2 | | 5,2 | | 6,4 | | 4,7 | | 5,0 | |
| | | sprf. | kond.[1] | sprf. | kond.[1] | sprf. | kond.[1] | sprf. | kond.[1] | sprf. | kond.[1] |
| Reißfestigkeit | MPa | 93 | 51 | 92 | 57 | 81 | 50 | 81 | 46 | 88 | 53 |
| Reißdehnung | % | 3 | 58 | 3 | 56 | 20 | 75 | 5 | 80 | 2 | 43 |
| Zug-E-Modul | MPa | 5500 | 2600 | 5300 | 3300 | 5000 | 1700 | 5500 | 1400 | 5500 | 2600 |
| Biegesp. 3,5 % | MPa | 133 | 51 | 131 | 68 | 118 | 38 | 117 | 33 | 135 | 51 |
| Biegefestigkeit | MPa | 143 | 65 | 141 | 80 | 129 | 52 | 125 | 46 | 144 | 64 |
| Randfaserdehnung | % | 5 | 8 | 5 | 7 | 6 | 8 | 5 | 8 | 5 | 7 |
| Biege E-Modul | MPa | 4700 | 2000 | 4600 | 2700 | 4200 | 1400 | 4300 | 1200 | 4800 | 2000 |
| IZOD an 23°C | KJ/m² | 50 | 250 | 50 | 170 | 120 | ng | 60 | ng | 30 | 210 |
| -30°C | KJ/m² | 39 | 40 | 36 | 40 | 54 | 80 | 33 | 40 | 27 | 34 |
| IZOD ak 23°C | KJ/m² | 6 | 9 | 5 | 8 | 7 | 16 | 6 | 13 | 6 | 8 |
| HDT Meth. A | °C | 60 | -- | 61 | -- | 67 | -- | 57 | -- | 61 | -- |

[1] Konditionierungs s. Tabelle 1

Tabelle 4

| Beispiel | $a_n$-Werte (23° C in [KJ $m^{-2}$]) nach t [Tagen] t = | 0 | 7 | 14 | 21 Tage |
|---|---|---|---|---|---|
| 1 | | 36 | 33 | 30 | 30 |
| 2 | | 38 | 37 | 31 | 28 |
| Vgl. 1 | | 56 | 25 | 26 | 26 |
| Vgl. 2 | | 38 | 21 | 19 | 19 |
| Vgl. 3 | | 34 | 22 | 21 | 20 |
| 3 | | 65 | 64 | 64 | 54 |
| 4 | | 67 | 63 | 64 | 54 |
| Vgl. 4 | | 71 | 40 | 32 | 34 |
| Vgl. 5 | | 67 | 30 | 28 | 22 |
| Vgl. 6 | | 64 | 27 | 26 | 23 |

Vergleichsbeispiele 16 - 23

In prinzipiell derselben Weise wie für die Beispiele 1 bis 2 beschrieben wurden PA-Compounds ohne Bisphenol bzw. mit je 10 Gew.-% (bezogen auf PA) Bisphenol A bzw. zweier sehr niedermolekularer Novolake (Typ 1: Phenol : $CH_2O$ ≈ 1 : 0,54; Typ 2: Phenol = $CH_2O$ ≈ 1 : 0,53; berechnet aus Zusammensetzung; klebrige Feststoffe = $T_G$ < 25° C (geschätzt); t in Formel (I) = 0 bis 1) hergestellt. Die Ergebnisse der mechanischen Prüfungen sind in den Tabellen 5 + 6 zusammengestellt.

Tabelle 5 PA-Compound[1)]

| Beispiel | | Vgl. 16[2)] | | Vgl. 17 | | Vgl. 18 | | Vgl. 19 | |
|---|---|---|---|---|---|---|---|---|---|
| Bisphenol A | % | - | | 7 | | - | | - | |
| Novolak | % | - | | - | | 7 (Typ 2) | | 7 (Typ 1) | |
| | | Spr.f. | Kond. | Spr.f. | Kond.[3)] | Spr.f. | Kond.[3)] | Spr.f. | Kond.[3)] |
| Aschegehalt | % | 30,0 | -- | 28,0 | -- | 28,9 | -- | 31,5 | -- |
| Fließspirale (260°C /105 bar) | cm | 49,0 | -- | 55,0 | -- | 56,0 | -- | 54,0 | -- |
| Reißfestigkeit | MPa | 180,0 | 110,0 | 190,0 | 91,0 | 169,0 | 89,0 | 174,0 | 91,0 |
| Reißdehnung | % | 3,0 | 6,0 | 2,3 | 8,3 | 2,7 | 8,3 | 3,3 | 8,2 |
| Zug-E-Modul | MPa | 10000,0 | 6200,0 | 10088,0 | 4875,0 | 10207,0 | 4947,0 | 10374,0 | 4983,0 |
| Biegefestigkeit | MPa | 290,0 | 150,0 | 239,0 | 139,0 | 240,0 | 135,0 | 248,0 | 137,0 |
| Randfaserdehnung | % | 4,0 | 6,0 | 4,4 | 7,0 | 4,6 | 7,0 | 4,6 | 7,0 |
| Biege E-Modul | MPa | 8000,0 | 5500,0 | 7006,0 | 3823,0 | 7142,0 | 3752,0 | 7464,0 | 3835,0 |
| IZOD KSZ RT | $J/m^2$ | 150,0 | 200,0 | 114,0 | 152,0 | 108,0 | 172,0 | 116,0 | 192,0 |
| -30°C | $J/m^2$ | 100,0 | 100,0 | 89,0 | 87,0 | 87,0 | 81,0 | 91,0 | 93,0 |
| HDT A | °C | 200,0 | -- | 195,0 | -- | 196,0 | -- | 191,0 | -- |
| Wasseraufnahme 48h/70 C | % | 5,9 | | 4,2 | | 4,9 | -- | 4,3 | -- |

1) PA 6 ($\eta_{rel} \approx 2,9$), 30 Gew.-% Glasfasern
2) Vergleich nicht extrudiert
3) 40°C, 95 % r.F.; Zeit bis zum Erreichen von 2,5 % $H_2O$-Gehalt

Tabelle 6 PA-Compound[1]

| Beispiel | | Vgl. 20 | | Vgl. 21 | | Vgl. 22 | | Vgl. 23 | |
|---|---|---|---|---|---|---|---|---|---|
| Bisphenol A | % | -- | | 7 | | - | | - | |
| Novolak | % | -- | | - | | 7 (Typ 2) | | 7 (Typ 1) | |
| | | Spr.f. | Kond. | Spr.f. | Kond.[2] | Spr.f. | Kond.[2] | Spr.f. | Kond.[2] |
| Aschegehalt | % | 28,6 | -- | 29,6 | -- | 33,1 | -- | 27,7 | -- |
| Fließspirale (260°C /105 bar) | cm | 50,0 | -- | 57,0 | -- | 58,0 | -- | 65,0 | -- |
| Reißfestigkeit | MPa | 129,0 | 78,0 | 149,0 | 80,0 | 152,0 | 85,0 | 140,0 | 78,0 |
| Reißdehnung | % | 4,2 | 15,5 | 3,4 | 11,4 | 4,1 | 12,2 | 3,8 | 12,9 |
| Zug-E-Modul | MPa | 8049,0 | 4155,0 | 9499,0 | 4090,0 | 10263,0 | 4453,0 | 8639,0 | 3884,0 |
| Biegefestigkeit | MPa | 203,0 | 112,0 | 221,0 | 128,0 | 229,0 | 119,0 | 208,0 | 109,0 |
| Randfaserdehnung | % | 5,3 | 7,1 | 4,7 | 6,9 | 5,2 | 6,9 | 5,4 | 7,1 |
| Biege E-Modul | MPa | 6176,0 | 3381,0 | 6732,0 | 3776,0 | 7128,0 | 3576,0 | 6126,0 | 3047,0 |
| IZOD KSZ RT | $J/m^2$ | 130,0 | 232,0 | 129,0 | 203,0 | 121,0 | 230,0 | 120,0 | 197,0 |
| -30°C | $J/m^2$ | 83,0 | 85,0 | 94,0 | 92,0 | 101,0 | 102,0 | 91,0 | 84,0 |
| HDT A | °C | 196,0 | -- | 184,0 | -- | 176,0 | -- | 184,0 | -- |
| Wasseraufnahme 48h/70 C | % | 6,1 | -- | 4,4 | -- | 3,5 | -- | 4,2 | -- |

1) PA 6 ($\eta_{rel}$ ≈ 2,9), 30 Gew.-% Glasfasern, 5 % Polybutadien-Kern-Schale-Elastomer
2) Konditionierung s. Tabelle 5

Beispiele 11 bis 13 und Vergleichsbeispiel 24

Polyamid 6 ($\eta_{rel}$ ≈ 3,0) wurde mit 5, 10 und 20 Gew.-% des in Beispiel 1 benutzten Novolaks compoundiert (ZSK 30, 12 kg h; 260 bis 265 °C).

Die mechanischen Eigenschaften spritzfrisch und konditioniert sind in Tabelle 7 zusammengestellt.

Beispiele 14 bis 16 und Vergleichsbeispiel 25

In derselben Weise wurde PA 6 ($\eta_{rel}$ ≈ 3,5) (270 bis 277 °C) verwendet (Tabelle 8).

Beispiele 17 bis 19 und Vergleichsbeispiel 26

In derselben Weise wurde PA 6 ($\eta_{rel} \approx 4$) (267 bis 291 °C) verwendet (Tabelle 9).

Tabelle 7

| Beispiel | Vgl.24 | 11 | 12 | 13 |
|---|---|---|---|---|
| PA 6 [%] | 100 | 95 | 90 | 80 |
| Novolak [%] | - | 5 | 10 | 20 |
| Eigenschaften [Einheit] | | | | |
| Streckspannung [MPa] | | | | |
| spritzfrisch | 78,6 | 87,6 | - | - |
| konditioniert (1) | 47,4 | 52,2 | 57,5 | - |
| Biegespannung 3,5 [MPa] | | | | |
| sprfr. | 91 | 105 | 111 | 118 |
| kond. | 28,2 | 40,0 | 59,5 | 110,2 |
| Biegefestigkeit [MPa] | | | | |
| sprfr. | 107 | 123 | 131 | 136 |
| kond. | 37,8 | 49,9 | 70,3 | 122,3 |
| Streckdehnung [%] | | | | |
| sprfr. | 4,05 | 4,24 | - | - |
| kond. | 23,62 | 20,70 | 16,50 | - |
| Reißdehnung [%] | | | | |
| sprfr. | 40 | 16 | 3 | 2,4 |
| kond. | 249 | 261 | 199 | 3,2 |

Tabelle 7 (Fortsetzung)

| Beispiel | Vgl.24 | 11 | 12 | 13 |
| --- | --- | --- | --- | --- |
| PA 6 [%] | 100 | 95 | 90 | 80 |
| Novolak [%] | - | 5 | 10 | 20 |
| Eigenschaften [Einheit] | | | | |
| Randfaserdehnung [%] | | | | |
| sprfr. | 5,5 | 5,5 | 5,4 | 4,6 |
| kond. | 9,33 | 9,26 | 7,95 | 5,67 |
| Zug-E-Modul [MPa] | | | | |
| sprfr. | 3030 | 3200 | 3380 | 3530 |
| kond. | 978 | 1371 | 1997 | 3442 |
| Biege-E-Modul [MPa] | | | | |
| sprfr. | 2680 | 3040 | 3170 | 3340 |
| kond. | 909 | 1256 | 1856 | 3352 |
| Izod $a_n$ [kJ $m^{-2}$] | | | | |
| sprfr. | 1*88, 9*ng[2)] | 6*96, 4*ng | 30,9 | 28,5 |
| kond. | ng | ng | 6*ng, 2*88,7 | 28,9 |
| Izod $a_k$ [kJ $m^{-2}$] | | | | |
| sprfr. | 6,9 | 6,1 | 5,7 | 4,7 |
| kond. | 31,4 | 15,0 | 7,0 | 4,9 |

Tabelle 7 (Fortsetzung)

| Beispiel | Vgl.24 | 11 | 12 | 13 |
|---|---|---|---|---|
| PA 6 [%] | 100 | 95 | 90 | 80 |
| Novolak [%] | - | 5 | 10 | 20 |
| Eigenschaften [Einheit] | | | | |
| HDT-A [°C]3) | 51 | 54 | 53 | 58 |
| HDT-C [°C]3) | 43 | 46 | 46 | 51 |
| Wasseraufnahme [%] (60°C, Wasserlagerung) | | | | |
| 0,5 d | 3,4 | 2,6 | 1,9 | 1,2 |
| 1 d | 6,2 | 4,5 | 3,3 | 2,0 |
| 2 d | 8,2 | 6,1 | 4,5 | 2,7 |
| 3 d | 8,6 | 7,0 | 5,3 | 2,7 |
| 6 d | 8,8 | 7,6 | 6,4 | 4,4 |
| 9 d | 8,8 | 7,5 | 6,5 | 4,6 |
| 16 d | 8,6 | 7,5 | 6,3 | 4,9 |
| 24 d | 8,5 | 7,4 | 6,2 | 4,8 |

1) Konditioniert nach ISO 1110; s. Tabelle 1

2) ng = nicht gebrochen

3) nur spritzfrisch bestimmt

Tabelle 8

| Beispiel | Vgl.25 | 14 | 15 | 16 |
|---|---|---|---|---|
| PA 6 [%] | 100 | 95 | 90 | 80 |
| Novolak [%] | - | 5 | 10 | 20 |
| Eigenschaften [Einheit] | | | | |
| Streckspannung [MPa] | | | | |
| sprfr. | 90,2 | 94,5 | 97,2 | - |
| kond. 1) | 50,4 | 54,1 | 59,0 | 88,3 |
| Reißfestigkeit [MPa] | | | | |
| sprfr. | 50,5 | 53,7 | 78,5 | 76,0 |
| kond. | 39,4 | 58,7 | 43,3 | 86,5 |
| Biegespannung 3,5 [MPa] | | | | |
| sprfr. | 102 | 107 | 106 | 109 |
| kond. | 34,5 | 47,2 | 67,5 | 117,2 |
| Biegefestigkeit [MPa] | | | | |
| sprfr. | 117 | 126 | 129 | 129 |
| kond. | 44,6 | 56,8 | 77,6 | 128,6 |
| Streckdehnung [%] | | | | |
| sprfr. | 3,80 | 4,17 | 4,10 | - |
| kond. | 21,7 | 19,2 | 5,25 | 3,48 |
| Reißdehnung [%] | | | | |
| sprfr. | 29 | 14 | 7 | 2,0 |
| kond. | 173 | 259 | 252 | 3,4 |

Tabelle 8 (Fortsetzung)

| Beispiel | Vgl.25 | 14 | 15 | 16 |
|---|---|---|---|---|
| PA 6 [%] | 100 | 95 | 90 | 80 |
| Novolak [%] | - | 5 | 10 | 20 |
| Eigenschaften [Einheit] | | | | |
| Randfaserdehnung [%] | | | | |
| sprfr. | 5,3 | 5,4 | 5,6 | 5,1 |
| kond. | 9,2 | 8,8 | 7,4 | 5,5 |
| Zug-E-Modul [MPa] | | | | |
| sprfr. | 3550 | 3470 | 3540 | 3540 |
| kond. | 1342 | 1671 | 2264 | 3659 |
| Biege-E-Modul [MPa] | | | | |
| sprfr. | 3080 | 3180 | 3120 | 3140 |
| kond. | 1108 | 1497 | 2139 | 3582 |
| Izod $a_n$ [kJ $m^{-2}$] | | | | |
| sprfr. | 3*64, 7*ng2) | 166 | 73 | 23 |
| kond. | ng | ng | ng | 25,8 |
| Izod $a_k$ [kJ $m^{-2}$] | | | | |
| sprfr. | 6,9 | 6,3 | 5,6 | 4,4 |
| kond. | 24,6 | 12,1 | 6,5 | 4,1 |

Tabelle 8 (Fortsetzung)

| Beispiel | Vgl.25 | 14 | 15 | 16 |
|---|---|---|---|---|
| PA 6 [%] | 100 | 95 | 90 | 80 |
| Novolak [%] | - | 5 | 10 | 20 |
| Eigenschaften [Einheit] | | | | |
| HDT-A [°C][3] | 58 | 57 | 58 | 60 |
| HDT-C [°C][3] | 44 | 48 | 50 | 53 |
| Wasseraufnahme [%] (60° C, Wasserlagerung) | | | | |
| 0,5 d | 3,5 | 2,7 | 2,0 | 1,1 |
| 1 d | 6,2 | 4,5 | 3,3 | 1,9 |
| 2 d | 8,0 | 6,0 | 4,4 | 2,6 |
| 3 d | 8,7 | 6,9 | 5,3 | 3,1 |
| 6 d | 8,9 | 7,6 | 6,4 | 4,2 |
| 9 d | 8,9 | 7,6 | 6,5 | 4,6 |
| 16 d | 9,0 | 7,6 | 6,4 | 4,7 |
| 24 d | 8,9 | 7,4 | 6,2 | 4,6 |

1) Legende s. Tabelle 7
2) s.o.
3) s.o.

Tabelle 9

| Beispiel | Vgl.26 | 17 | 18 | 19 |
|---|---|---|---|---|
| PA 6 [%] | 100 | 95 | 90 | 80 |
| Novolak [%] | - | 5 | 10 | 20 |
| Eigenschaften [Einheit] | | | | |
| Streckspannung [MPa] | | | | |
| sprfr. | 81,0 | 86,9 | 94,9 | - |
| kond. [1)] | 45,5 | 48,8 | 55,0 | 85,6 |
| Reißfestigkeit [MPa] | | | | |
| sprfr. | 57,3 | 49,0 | 54,6 | 86,5 |
| kond. | 63,9 | 69,1 | 42,2 | 43,0 |
| Biegespannung 3,5 [MPa] | | | | |
| sprfr. | 91 | 97 | 106 | 115 |
| kond. | 27,6 | 38,5 | 61,5 | 108,3 |
| Biegefestigkeit [MPa] | | | | |
| sprfr. | 107 | 117 | 127 | 142 |
| kond. | 37,4 | 48,0 | 71,4 | 119,6 |
| Streckdehnung [%] | | | | |
| sprfr. | 4,00 | 4,06 | 4,21 | - |
| kond. | 24,1 | 21,7 | 16,1 | 3,84 |
| Reißdehnung [%] | | | | |
| sprfr. | 50 | 35 | 19 | 5,6 |
| kond. | 234 | 252 | 265 | 20,3 |

Tabelle 9 (Fortsetzung)

| Beispiel | Vgl.26 | 17 | 18 | 19 |
|---|---|---|---|---|
| PA 6 [%] | 100 | 95 | 90 | 80 |
| Novolak [%] | - | 5 | 10 | 20 |
| Eigenschaften [Einheit] | | | | |
| Randfaserdehnung [%] | | | | |
| sprfr. | 5,5 | 5,5 | 5,5 | 5,6 |
| kond. | 9,2 | 9,2 | 7,6 | 5,7 |
| Zug-E-Modul [MPa] | | | | |
| sprfr. | 3000 | 3150 | 3370 | 3550 |
| kond. | 932 | 1224 | 1869 | 3435 |
| Biege-E-Modul [MPa] | | | | |
| sprfr. | 2670 | 2810 | 3020 | 3240 |
| kond. | 855 | 1195 | 1968 | 3308 |
| Izod $a_n$ [$kJ\ m^{-2}$] | | | | |
| sprfr. | 1*126, 9*ng[2)] | 3*143, 7*ng | 188 | 42 |
| kond. | ng | ng | ng | 47,5 |
| Izod $a_k$ [$kJ\ m^{-2}$] | | | | |
| sprfr. | 8,0 | 6,9 | 5,6 | 4,9 |
| kond. | 37,8 | 19,2 | 7,9 | 4,1 |

Tabelle 9 (Fortsetzung)

| Beispiel | Vgl.26 | 17 | 18 | 19 |
|---|---|---|---|---|
| PA 6 [%] | 100 | 95 | 90 | 80 |
| Novolak [%] | - | 5 | 10 | 20 |
| Eigenschaften [Einheit] | | | | |
| HDT-A [°C]3) | 51 | 54 | 56 | 57 |
| HDT-C [°C]3) | 44 | 48 | 51 | 52 |
| Wasseraufnahme [%] (60° C, Wasserlagerung) | | | | |
| 0,5 d | 3,6 | 2,9 | 2,1 | 1,2 |
| 1 d | 6,4 | 4,9 | 3,6 | 2,0 |
| 2 d | 8,3 | 6,5 | 4,7 | 2,7 |
| 3 d | 8,9 | 7,5 | 5,6 | 3,3 |
| 6 d | 9,0 | 8,0 | 6,7 | 4,5 |
| 9 d | 9,1 | 8,0 | 6,7 | 4,7 |
| 16 d | 9,0 | 7,9 | 6,6 | 4,9 |
| 24 d | 9,0 | 7,8 | 6,5 | 4,8 |

1) Legende s. Tabelle 1
2) s.o.
3) s.o.

Wie die Beispiele klar aufzeigen, bewirken allein die erfindungsgemäß zu verwendenden Novolake mit bestimmter Mindesthöhe der Glastemperatur eine erhöhte Steifigkeit und Festigkeit nach Konditionierung und erhöhte Beständigkeit gegen Thermooxidation. Weiterhin zeigen die Beispiele, daß bei Anwesenheit eines Elastomermodifikators die erfindungsgemäßen Formmassen ein besonders ausgewogenes Eigenschaftsprofil besitzen.

**Patentansprüche**

1. Verwendung thermoplastischer Phenol-Formaldehydharze (Novolake) der Struktur (I)

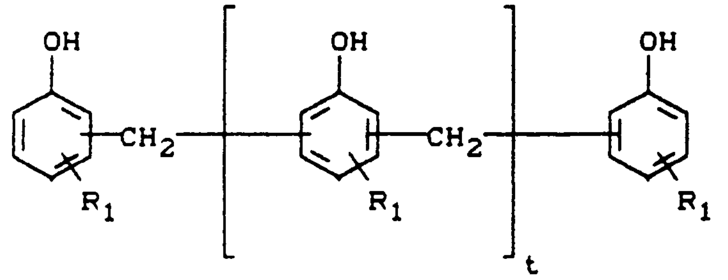

(I),

wobei

$R_1$ Wasserstoff oder $C_{1-5}$-Alkyl oder Phenyl, insbesondere Wasserstoff oder $CH_3$, ganz besonders bevorzugt Wasserstoff,

t eine ganze Zahl von (im Schnitt) mindestens 2 bis ca. 15

bedeuten, wobei die Glastemperatur der Novolake (I) nicht kleiner als ca. 50 °C sein sollen, zur Herstellung von Polyamidformmassen mit erhöhter Steifigkeit und/oder Festigkeit nach Konditionierung und erhöhter Beständigkeit gegen Thermooxidation, wobei der Biege-E-Modul bei Einsatz von 10 Gew.-% Novolak (I) bei einer Konditionierung nach ISO 1110 einen um mindestens 10 % erhöhten Wert gegenüber einem novolakfreien Polyamid aufweisen soll.

**2.** Verwendung nach Anspruch 1, dadurch gekennzeichnet, daß 1 bis 30 Gew.-% der Novolake (I), bezogen auf resultierendes Polyamid, bevorzugt > 5 bis 25 Gew.-%, besonders bevorzugt 7 bis 15 Gew.-% und insbesondere bevorzugt 8 bis 12 Gew.-%, verwendet werden zur Herstellung von Polyamidformmassen mit erhöhter Steifigkeit nach Konditionierung.

**3.** Verwendung nach Ansprüchen 1 und 2, dadurch gekennzeichnet, daß zur Herstellung der Novolake (I) als Phenole beispielsweise und bevorzugt Phenol, o-, m- und p-Kresol sowie p-Phenylphenol eingesetzt werden, wobei Phenol und p-Methylphenol besonders bevorzugt sind.

**4.** Verwendung nach Ansprüchen 1 bis 3, dadurch gekennzeichnet, daß die Novolake (I) bevorzugt Glastemperaturen (nach DSC) von mindestens 55 °C und insbesondere bevorzugt von mindestens 60 °C, aufweisen sollen.

**5.** Verwendung nach Ansprüchen 1 bis 4, dadurch gekennzeichnet, daß als Polyamide bevorzugt PA6, 66, 610, 69, 11, 12, 1212, 6/66-Copolyamide und Copolyamide auf Basis PA6 oder 66 und besonders bevorzugt PA6, 66 sowie Mischungen von oder Copolyamide auf Basis PA6 bzw. 66 eingesetzt werden.

**6.** Verwendung nach Ansprüchen 1 bis 5, dadurch gekennzeichnet, daß zusätzlich als Füll-/Verstärkungsstoffe faserige (Glas-, Kohlenstoffasern) Verstärkungsstoffe und mineralische Füllstoffe (beispielsweise Talkum, Glimmer, Kaolin, Wollastonit, Quartz, Dolomit u.a.m.) eingesetzt werden.

**7.** Verwendung nach Ansprüchen 1 bis 6, dadurch gekennzeichnet, daß als Zusatzstoffe UV-Stabilisatoren, Antioxidantien, Pigmente, Farbstoffe, Nukleierungsmittel, Kristallisationsbeschleuniger bzw. Verzögerer, Fließhilfsmittel, Gleitmittel, Entformungsmittel, Flammschutzmittel (mit Ausnahme von Phosphorylnitrid bzw. seinen Vorstufen und Alkali- bzw. Ammoniumphosphaten) sowie Kautschuke bzw. kautschukartige Polymere (Schlagzähmodifikatoren), bevorzugt auf Polydien-, Polyacrylat- und Polyolefinbasis, eingesetzt werden.

**8.** Verwendung nach Ansprüchen 1 bis 7, dadurch gekennzeichnet, daß bevorzugt die Novolake (I) in Kombination mit

A) mindestens 35 Gew.-% (bezogen auf A) - C)) an Polyamiden nach Anspruch 5,

B) bis zu 60 Gew.-% (bezogen auf A) - C)) aus Glasfasern, Kohlenstoffasern, Glaskugeln und mineralischen Füllstoffen und anderen Füll-/Verstärkungsstoffen,

sowie

C) Gleit- bzw. Entformungsmitteln, Farbstoffen, Pigmenten, Nukleierungsmitteln, Stabilisatoren, Antioxidantien sowie schlagzähmodifizierenden Kautschuken (Dien-, Olefin-, Acrylat-Kautschuke) in Mengen von bis zu 20 Gew.-% (bezogen auf A) - C)) nach Anspruch 7

und besonders bevorzugt in Kombination mit
A') mindestens 40 Gew.-% (bezogen auf A') - D')) Polyamiden A),
B') bis zu 50 Gew.-%, insbesondere 5 bis 50 Gew.-%, (bezogen auf A') - D')) an Verstärkungs-/Füllstoffen B),
C') 1 bis 15 Gew.-%, insbesondere 3 bis 12 Gew.-%, (bezogen auf A') - D')) an (bevorzugt funktionalisierten) Dien-, Acrylat- oder Olefin-Kautschuken

sowie
D') Gleit- bzw. Entformungsmitteln, Pigmenten, Farbstoffen, Stabilisatoren, Antioxidantien, Nukleierungsmitteln usw. nach Anspruch 7 in üblichen Mengen,
wobei die Prozentangaben aller Komponenten sich jeweils zu 100 % ergänzen sollen,

eingesetzt werden.

**9.** Verwendung nach Ansprüchen 1 bis 8, dadurch gekennzeichnet, daß die Komponenten in der Schmelze, in einem oder mehreren Schritten, als reine Stoffe oder als Konzentrate, miteinander vermischt werden.

**10.** Verwendung der Formmassen mit gleichzeitig erhöhter Steifigkeit / Festigkeit nach Konditionierung und erhöhter Beständigkeit gegen thermooxidativen Angriff nach Ansprüchen 1-9 zur Herstellung von Formteilen, insbesondere solcher Formteile, an die hohe Anforderungen bzgl. mechanischer Festigkeit / Steifigkeit und thermischer Belastbarkeit gestellt werden, insbesondere zur Herstellung solcher Teile, die Temperaturen von 100 °C und mehr, bevorzugt 110 °C und mehr und insbesondere bevorzugt 120 °C und mehr, ausgesetzt sein können.

Europäisches Patentamt

# EUROPÄISCHER RECHERCHENBERICHT

Nummer der Anmeldung

**EP 91 11 3810**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 9, Nr. 184 (C-294), 30. Juli 1985;<br>& JP-A-60 051 744 (DAIWA K.K.) 23-03-1985<br>– – – | 1-10 | C 08 L 77/00 //<br>(C 08 L 77/00<br>C 08 L 61:06 ) |
| Y | PATENT ABSTRACTS OF JAPAN, Band 9, Nr. 184 (C-294), 30. Juli 1985;<br>& JP-A-60 051 745 (DAIWA K.K.) 23-03-1985<br>– – – | 1-10 | |
| Y | PATENT ABSTRACTS OF JAPAN, Band 1, Nr. 27 (C-008), 28. März 1978;<br>& JP-A-51 142 099 (TERADA BOSEKI) 07-12-1976<br>– – – | 1-10 | |
| Y | DATABASE WPIL/DERWENT, Accession Nr. 81-07322D [05], Derwent Publications Ltd, London, GB;<br>& SU-A-737 413 (LENINGRAD LENSOVET)<br>– – – | 1-10 | |
| Y | DATABASE WPIL/DERWENT, Accession Nr. 88-255713 [36], Derwent Publications Ltd, London, GB;<br>& SU-A-1 375 632 (TEXTILE EQUIP. RES.)<br>– – – | 1-10 | **RECHERCHIERTE SACHGEBIETE (Int. Cl.5)** |
| Y | CHEMICAL ABSTRACTS, Band 90, Nr. 12, 19. März 1979, Seite 54, Zusammenfassung Nr. 88626a, Columbus, Ohio, US; V.N. STEPANOV et al.: "Properties of polycaproamide fibers modified with phenol-formaldehyde Novolak oligomer",<br>& KHIM. VOLOKNA 1978, (6), 51-3<br>– – – | 1-7 | C 08 L |
| Y | PATENT ABSTRACTS OF JAPAN, Band 12, Nr. 96 (C-484), 29. März 1988;<br>& JP-A-62 227 939 (UBE IND.) 06-10-1987<br>– – – – – | 1-10 | |

Der vorliegende Recherchenbericht wurde für alle Patentansprüche erstellt

| Recherchenort | Abschlußdatum der Recherche | Prüfer |
|---|---|---|
| Den Haag | 26 November 91 | LEROY ALAIN |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamille, übereinstimmendes Dokument